# NEUE EUROPÄISCHE PATENTSCHRIFT

(11) **EP 2 425 135 B2**
(45) Veröffentlichungstag und Bekanntmachung des Hinweises auf die Entscheidung über den Einspruch: **02.08.2017**
(45) Hinweis auf die Patenterteilung: 15.01.2014
(21) Anmeldenummer: 10700306.3
(22) Anmeldetag: 16.01.2010
(51) Int. Cl.: F04B 17/05, F04B 35/00

(54) **KOMPRESSOR UND KUPPLUNGSEINRICHTUNG**
COMPRESSOR AND CLUTCH DEVICE
COMPRESSEUR ET DISPOSITIF D'ACCOUPLEMENT

(30) Priorität: 28.04.2009 DE 102009018843
(43) Veröffentlichungstag der Anmeldung: 07.03.2012
(73) Patentinhaber: WABCO GmbH, 30453 Hannover (DE)
(72) Erfinder: AKEMANN, Volker, 30659 Hannover (DE); GROSSKOPF, Joachim, 30952 Ronnenberg (DE); HERZOG, Stefan, 30982 Pattensen (DE); KREBS, Steffen, 31028 Gronau (DE); PRETSCH, Andreas, 30880 Laatzen (DE); STOFFELS, Ralf, 29581 Gerdau (DE); STUMBERG, Ingo, 30625 Hannover (DE)
(74) Vertreter: Lauerwald, Jörg
(86) Internationale Anmeldenummer: PCT/EP2010/000226
(87) Internationale Veröffentlichungsnummer: WO 2010/124750

(56) Entgegenhaltungen:
- EP-A1- 0 051 760
- EP-A1- 0 122 015
- EP-A1- 0 238 336
- EP-A1- 0 437 677
- EP-A1- 1 978 250
- EP-A2- 0 284 388
- WO-A1-00/28194
- DE-A1-102007 027 815
- GB-A- 2 162 255
- GB-A- 2 182 732
- US-A- 5 713 129
- US-A1- 2004 074 700
- US-A1- 2005 076 858

## Beschreibung

Die Erfindung betrifft einen Kompressor für die Drucklufterzeugung in einem Fahrzeug gemäß dem Oberbegriff des Patenanspruchs 1. Der Kompressor kann über eine Kupplungseinrichtung, zum Beispiel eine Abschaltkupplung, von einem Antrieb trennbar oder damit verbindbar sein.

Ein gattungsgemäßer Kompressor ist zum Beispiel aus der DE 20 2006 019 190 U1 oder der EP 0238 336 A1 bekannt.

Die Verwendung der bekannten Abschaltkupplung an Kompressoren hat den Vorteil, dass der Kompressor zur Energieeinsparung von einem Antrieb, zum Beispiel dem Antriebsmotor des Fahrzeuges, getrennt werden kann, wenn keine Drucklufterzeugung erforderlich ist. Ohne eine solche Abschaltkupplung war es bisher üblich, den Kompressor immer mit dem Antriebsmotor mitlaufen zu lassen und in Phasen, in denen keine Drucklufterzeugung erforderlich war, lediglich pneumatisch neutral zu schalten. Die Einführung einer Abschaltkupplung zum Zu- und Abschalten des Kompressors hat zur Folge, dass der Kompressor beim Zuschalten einem höheren Verschleiß unterworfen wird als beim ständigen Betrieb.

Der Erfindung liegt daher die Aufgabe zugrunde, die Verschleißfestigkeit und Modularität des Kompressors zu verbessern.

Diese Aufgabe wird durch die in dem unabhängigen Anspruch angegebene Erfindung gelöst. Die Unteransprüche enthalten vorteilhafte Ausgestaltungen der Erfindung.

Die Erfindung hat den Vorteil, die Verschleißfestigkeit des Kompressors und damit die Dauerhaltbarkeit auch bei Verwendung einer Kupplungseinrichtung deutlich zu verbessern.

Die Erfindung wird nachfolgend anhand von Ausführungsbeispielen unter Verwendung von Zeichnungen näher erläutert.

Es zeigen:
- Figur 1: einen Zweizylinder-Kompressor in schematischer Darstellung und
- Figur 2: ein Spritzpleuel in Schnittdarstellung und
- Figur 3: die einlassseitige Ausgestaltung der Schmiermittelversorgung und
- Figur 4: Details eines Kolbens mit Kolbenringen.

In den Figuren werden gleiche Bezugszeichen für einander entsprechende Elemente verwendet.

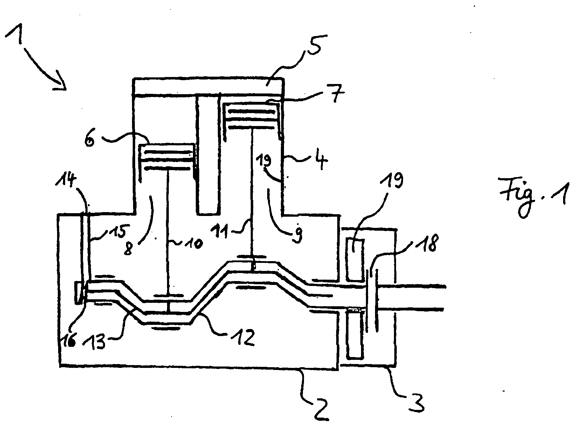

Die Figur 1 zeigt einen Kompressor 1 mit einem Kompressorgehäuse 2 und eine an dem Kompressorgehäuse 2 angeordnete Kupplungseinrichtung 3. Die Kupplungseinrichtung 3 ist als pneumatisch betätigbare Abschaltkupplung ausgebildet. Hierfür weist die Kupplungseinrichtung 3 einen pneumatischen Betätigungszylinder 19 auf, über den bei pneumatischer Beaufschlagung Koppelmittel 18, z. B. Kupplungslamellen oder Kupplungsscheiben, aneinander pressbar oder voneinander trennbar sind. Die Kupplungseinrichtung 3 verbindet eine Kurbelwelle 12 des Kompressors 1 mit einer Antriebswelle einer nicht näher dargestellten Antriebseinrichtung eines Fahrzeuges, zum Beispiel dem Fahrzeugmotor.

Der Kompressor 1 weist einen ersten Zylinder 8 und einen zweiten Zylinder 9 auf. In dem ersten Zylinder 8 ist ein erster Kolben 6 angeordnet. In dem zweiten Zylinder 9 ist ein zweiter Kolben 7 angeordnet. Der erste Kolben 6 ist über ein erstes Pleuel 10 und entsprechende Lager mit der Kurbelwelle 12 verbunden. Der zweite Kolben 7 ist über ein zweites Pleuel 11 ebenfalls über entsprechende Lager mit der Kurbelwelle 12 verbunden. Die Lagerung der Kolben 6, 7 und der Kurbelwelle 12 in den entsprechenden Lageraugen der Pleuel 10, 11 ist in der Figur 1 der Einfachheit halber nur schematisch dargestellt. In der Praxis werden hierfür geeignete Gleit- oder Wälzlager eingesetzt. Die Zylinder 8, 9 sind in einem Zylindergehäuse 4 des Kompressors 1 angeordnet. Das Zylindergehäuse 4 ist Teil des Gehäuses 2.

Auf dem Zylindergehäuse 4 ist ein Ventil- und Steuerblock 5 angeordnet, der beispielsweise die Einlass- und Auslassventile für die Druckluftansaugung und für die Druckluftabgabe an nachgeschaltete Einheiten wie z.B. Druckluftvorratsbehälter beinhaltet. Der Ventilblock 5 kann im Einzelnen beispielsweise gemäß der DE 197 451 18 A1 ausgebildet sein.

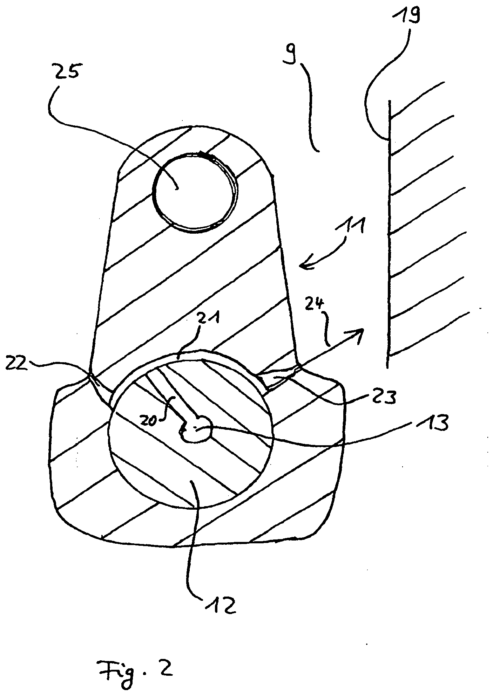

Zur Schmierung der Kolben 6, 7 in den jeweiligen Zylindern 8, 9 weist der Kompressor 1 eine Schmiermittelversorgung auf. Als Schmiermittel wird beispielsweise Öl verwendet, zum Beispiel das Motoröl des Fahrzeugmotors. Die Schmiermittelversorgung des Kompressors 1 weist einen Schmiermittelanschluss 14 auf, der mit der Motoröl-Versorgung des Fahrzeugmotors zu verbinden ist. Von dem Schmiermittelanschluss 14 führt ein erster Schmiermittelkanal 15 durch das Gehäuse 2 zu einer um die Kurbelwelle 12 umlaufenden Schmiermittel-Versorgungsnut 16. Die Schmiermittel-Versorgungsnut 16 ist mit einem Schmiermittelversorgungs-Kanalabschnitt 13 verbunden, der in Form eines Hohlkanals innerhalb der Kurbelwelle 12 verläuft. Der Kanalabschnitt 13 steht mit Auslassstellen für das Schmiermittel im Bereich der Pleuel 10, 11 in Verbindung, die nachfolgend anhand der Figur 2 im Detail näher erläutert werden. Die Verwendung der umlaufenden Schmiermittel-Versorgungsnut 16 hat den Vorteil, dass sich das Schmiermittel auf dem Umfang der Kurbelwelle 12 verteilen kann und hierdurch relativ schnell und gleichmäßig in den Schmiermittel-Kanalabschnitt 13 eingespeist werden kann.

Das Schmiermittel ist üblicherweise druckbeaufschlagt und steht unter einem Druck von etwa 3 bis 4 bar. Hierdurch ist eine Schmiermittelversorgung unabhängig von der Bewegung des Kompressors möglich, d.h. auch bei stehendem Kompressor.

Die Figur 2 zeigt das Pleuel 11 in Schnittdarstellung. Zusätzlich ist auch die Zylinderwand 19 des Zylinders 9 dargestellt. Das Pleuel 11 weist ein Pleuelauge 25 auf, das mit dem Zylinder 7 verbunden ist. Ein weiteres (unteres) Pleuelauge umfasst die Kurbelwelle 12, die in der Figur 2 ebenfalls in Schnittdarstellung wiedergegeben ist. Zwischen der Kurbelwelle 12 und dem die Kurbelwelle umfassenden Pleuelauge ist in der Praxis noch ein Lager, zum Beispiel ein Kugellager, vorgesehen, das in der Figur 2 zur Vereinfachung der Darstellung nicht explizit dargestellt ist. Wie erkennbar ist, ist der Kanalabschnitt 13 mit einem radialen Schmiermittelabschnitt 20 in der Kurbelwelle 12 verbunden, der zum Einführen des Schmiermittels in das Pleuel 11 dient. Das Pleuel 11 weist im Bereich des die Kurbelwelle 12 aufnehmenden Pleuelauges einen segmentartig erweiterten Abschnitt 21 auf, der einen Kanal zwischen der Kurbelwelle und der Pleuelauge-Innenseite bildet. Der erweiterte Abschnitt 21 kann vorteilhaft als Einstich innerhalb des Pleuelauges ausgeführt sein. Alternativ oder zusätzlich kann der Abschnitt 21 auch als Nut in der Kurbelwelle 12 ausgeführt sein. Entscheidend ist, dass ein Kanal zur Weiterleitung des Schmiermittels von dem Kanalabschnitt 13 zu Schmiermittel-Auslassen 22, 23, gebildet wird. Der Einstich 21 leitet das Schmiermittel weiter zu den Schmiermittel-Auslassen 22, 23, die beidseits des Pleuels 11 vorgesehen sind. Denkbar ist auch eine Ausführung mit nur einem Schmiermittel-Auslass 22 oder 23, ein erhöhter Schmiermitteldurchsatz ist jedoch durch mehrere Schmiermittel-Auslässe erreichbar. Die Schmiermittel-Auslässe 22, 23 sind in Richtung der Schmiermittelauslassöffnung hin verjüngend ausgebildet und somit in der Art einer Düse ausgeführt. Aufgrund des Überdrucks des Schmiermittels und der Düsenwirkung der Schmiermittel-Auslässe 22, 23 wird das Schmiermittel aus den Öffnungen herausgespritzt und trifft, wie in der Figur 2 durch den Pfeil 24 angedeutet, auf die Zylinderwand 19. Hierdurch wird eine frühzeitige und gute Schmierung der Zylinderwand gegenüber dem Zylinder sichergestellt, auch bei zeitweise über die Kupplungseinrichtung 3 abgeschaltetem Kompressor 1.

Die Verjüngung der Schmiermittel-Auslässe 22, 23 kann kontinuierlich oder gestuft ausgeführt sein, mit linearer oder gewölbter Kontur.

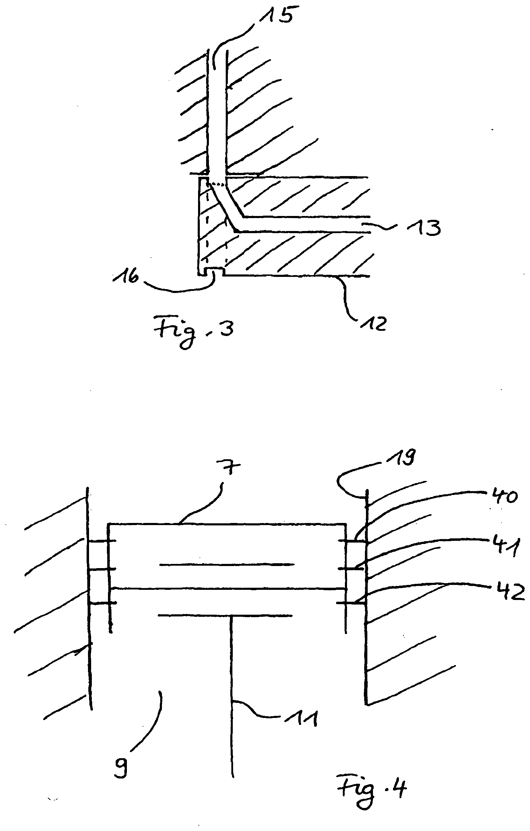

Die Figur 3 zeigt die einlassseitige Verbindung der Kurbelwelle 12 zu dem Schmiermittelanschluss 14. Wie erkennbar ist, steht der Schmiermittel-Kanalabschnitt 13 mit der umlaufenden Nut 16 der Kurbelwelle 12 in Verbindung. Hierdurch ist bei jeder Drehwinkelposition der Kurbelwelle eine Verbindung zu dem Schmiermittelkanal 15 sichergestellt, so dass ein sicherer und hoher Durchsatz an Schmiermittel durch die Kanäle 15, 13 gewährleistet wird.

In einer vorteilhaften Ausgestaltung der Erfindung weist der Schmiermittelversorgungskanal 13, 15, 16, 20, 21 zusätzlich eine Schmiermittelversorgungsgalerie mit einer Mehrzahl von fest in dem Kurbelgehäuse des Kompressors 1 angeordneten Schmiermittel-Düsen auf. Die Schmiermittel-Düsen sind zum Anspritzen der Zylinderbohrung mit dem Schmiermittel eingerichtet. Hierfür können die Schmiermittel-Düsen mit ihrer Auslassstelle auf die Zylinderbohrung bzw. die Zylinderwand 19 ausgerichtet sein. Hierdurch kann die Schmierung des Kompressors weiter verbessert werden.

Die Figur 4 zeigt ausschnittsweise den Zylinder 9 mit dem Kolben 7. Der Kolben 7, und ggf. auch der Kolben 6, sind mit in umlaufenden Nuten des Kolbens angeordneten Kolbenringen 40, 41, 42 versehen. Die Kolbenringe 40, 41 sind als Verdichtungsringe ausgebildet und sorgen für eine Luft-Abdichtung des oberhalb des Kolbens 7 liegenden Verdichtungsraums gegenüber dem unten liegenden Kurbelgehäuse. Durch Verwendung zweier Verdichtungsringe kann gegenüber einem Verdichtungsring eine erhöhte Dichtigkeit erreicht werden. Der Kolbenring 42 ist als Ölabstreifring ausgebildet. Der Ölabstreifring soll ein Eindringen von Öl in den oberhalb des Kolbens 7 liegenden Verdichtungsraum vermeiden. Wie erkennbar ist, laufen bei einer Bewegung des Kolbens 7 in dem Zylinder 9 sämtliche Kolbenringe 40, 41 und 42 entlang der Zylinderlauffläche 19. Zur Erhöhung der Dauerfestigkeit des Kompressors weist der Ölabstreifring 42 eine verschleißmindernde Beschichtung auf. Die Beschichtung kann vorteilhaft Chrom enthalten. In einer vorteilhaften Ausgestaltung der Erfindung ist der Ölabstreifring 42 an seiner Außenfläche verchromt ausgebildet.

Wie der Figur 1 zudem zu entnehmen ist, ragt die Kupplungseinrichtung 3 über das Gehäuse 2 des Kompressors 1 hinaus, das heißt die Kupplungseinrichtung ist nicht, wie aus DE 20 2006 019 190 U1 bekannt, in das Gehäuse integriert. Die Kupplungseinrichtung 3 ragt zumindest mit einem die Koppelmittel 18, z.B. den Kupplungsscheiben -oder Lamellenteil, beinhaltenden Bereich aus dem

Gehäuse 2 des Kompressors 1 hinaus. Die äußere Anordnung der Kupplungseinrichtung bietet den Vorteil der Modularität. Der erfindungsgemäße Kompressor kann daher baugleich sowohl mit als auch ohne Kupplungseinrichtung verwendet werden. Bei Bedarf wird die Kupplungseinrichtung lediglich an das Gehäuse 2 des Kompressors 1 angeschraubt.

Der erfindungsgemäße Kompressor weist zusammengefasst die folgenden Merkmale auf:
- Verwendung von Verdichtungs- und Ölabstreifringen mit einer höheren Verschleißfestigkeit
- Kolben mit zusätzlichen Bohrungen in der zweiten Nut
- Spritzpleuel zur Bohrungsschmierung, z. B. wie anhand der Fig. 1 und 2 zuvor erläutert, mit einer oder zwei Auslassöffnungen und/oder zusätzlicher Bolzenschmierung
- Ölversorgungsnut im Pleueloberteil
- Nut in der Kurbelwelle oder einer Lagerbuchse zur Erhöhung des Öldurchsatzes
- Ölversorgungsgalerie mit Düsen zur dauerhaften Anspritzung der Zylinderbohrungen
- die Ölversorgungsnut im Pleuel kann asymmetrisch vorgegossen sein
- die Nut 16 in der Kurbelwelle kann nur einseitig, z. B. auf der Nichtantriebsseite, vorgesehen sein.

## Patentansprüche

1. Kompressor (1) für die Drucklufterzeugung in einem Fahrzeug, mit wenigstens einem Kolben (6, 7), einem Zylinder (8, 9), einer Kurbelwelle (12), einem Schmiermittelanschluss (14) und einem Schmiermittelversorgungskanal (13, 15 16, 20, 21), sowie mit einer Kupplungseinrichtung (3), mittels der die Kurbelwelle (12) des Kompressors (1) mit einer Antriebseinrichtung verbindbar bzw. davon trennbar ist, wobei der Schmiermittelversorgungskanal (13, 15, 16, 20, 21) in wenigstens einen im Inneren des Kompressors (1) vorgesehenen Schmiermittelauslass (22, 23) mündet, der zumindest in bestimmten Drehpositionen der Kurbelwelle (12) auf eine Kolbenlauffläche (19) des Zylinders (8, 9) gerichtet ist, **dadurch gekennzeichnet, dass** wobei die Kupplungseinrichtung (3) als pneumatische Abschaltkupplung ausgebildet ist, und wobei die Kupplungseinrichtung (3) an dem Kompressorgehäuse (2) angeordnet ist und zumindest mit einem wenigstens ein Koppelmittel (18) beinhaltenden Bereich aus dem Gehäuse (2) des Kompressors (1) hinausragt.

2. Kompressor nach Anspruch 1, **dadurch gekennzeichnet, dass** der Schmiermittelversorgungskanal (13, 15, 16, 20, 21) einen durch die Kurbelwelle (12) führenden Kanalabschnitt (13) aufweist.

3. Kompressor nach Anspruch 2, **dadurch gekennzeichnet, dass** die Kurbelwelle (12) eine mit dem Schmiermittelanschluss (14) hinsichtlich der Schmiermittelführung in Verbindung stehende umlaufende Nut (16) aufweist, die hinsichtlich der Schmiermittelführung mit dem durch die Kurbelwelle (12) führenden Kanalabschnitt (13) verbunden ist.

4. Kompressor nach Anspruch 2 oder 3, **dadurch gekennzeichnet, dass** ein den Kolben (6, 7) mit der Kurbelwelle (12) verbindendes Pleuel (10, 11) den Schmiermittelauslass (22, 23) aufweist.

5. Kompressor nach Anspruch 4, **dadurch gekennzeichnet, dass** der Schmiermittelversorgungskanal (13, 15, 16, 20, 21) einen zwischen dem Pleuel (10, 11) und der Kurbelwelle (12) gebildeten Kanalabschnitt (21) aufweist.

6. Kompressor nach Anspruch 5, **dadurch gekennzeichnet, dass** das Pleuel (10, 11) als einen Teil des Schmiermittelversorgungskanals (13, 15, 16, 20, 21) einen Einstich (21) aufweist.

7. Kompressor nach wenigstens einem der vorhergehenden Ansprüche, **dadurch gekennzeichnet, dass** der Schmiermittelauslass (22, 23) in Richtung der Schmiermittelauslassöffnung verjüngend nach Art einer Düse ausgebildet ist.

8. Kompressor nach wenigstens einem der vorhergehenden Ansprüche, **dadurch gekennzeichnet, dass** der Schmiermittelversorgungskanal (13, 15, 16, 20, 21) eine Schmiermittelversorgungsgalerie mit einer Mehrzahl von fest in dem Kurbelgehäuse des Kompressors (1) angeordneten Schmiermittel-Düsen aufweist, wobei die Schmiermittel-Düsen zum Anspritzen der Zylinderbohrung mit dem Schmiermittel eingerichtet sind.

9. Kompressor (1) für die Drucklufterzeugung in einem Fahrzeug, mit wenigstens einem Kolben (6, 7), insbesondere nach wenigstens einem der vorhergehenden Ansprüche, **dadurch gekennzeichnet, dass** an dem Kolben (6, 7) ein Ölabstreifring (42) angeordnet ist, der eine abriebvermindernde Beschichtung aufweist.

10. Kompressor nach Anspruch 9, **dadurch gekennzeichnet, dass** die Beschichtung Chrom enthält.

## Claims

1. Compressor (1) for generating compressed air in a vehicle, comprising at least one piston (6, 7), a cylinder (8, 9), a crankshaft (12), a lubricant connection (14) and a lubricant supply channel (13, 15, 16, 20, 21), and with a clutch device (3) by means of which the crankshaft (12) of the compressor (1) can be connected to or disconnected from a drive arrangement, wherein the lubricant supply channel (13, 15, 16, 20, 21) opens into at least one lubricant outlet (22, 23) provided in the interior of the compressor (1), which lubricant outlet (22, 23) is directed towards a piston running surface (19) of the cylinder (8, 9), at least in certain rotational positions of the crankshaft (12), **characterized in that** the clutch device (3) is designed as a pneumatic shutoff clutch, and wherein the clutch device (3) is arranged on the compressor housing (2) and projects from the housing (2) of the compressor (1) at least with a region containing at least a coupling means (18).

2. Compressor according to Claim 1, **characterized in that** the lubricant supply channel (13, 15, 16, 20, 21) includes a channel section (13) leading through the crankshaft (12).

3. Compressor according to Claim 2, **characterized in that** the crankshaft (12) has a peripheral groove (16) which is connected to the lubricant connection (14) with regard to lubricant guidance and is connected to the channel section (13) leading through the crankshaft (12) with regard to lubricant guidance.

4. Compressor according to Claim 2 or 3, **characterized in that** a connecting rod (10, 11) which connects the piston (6, 7) to the crankshaft (12) includes the lubricant outlet (22, 23).

5. Compressor according to Claim 4, **characterized in that** the lubricant supply channel (13, 15, 16, 20, 21) includes a channel section (21) formed between the connecting rod (10, 11) and the crankshaft (12).

6. Compressor according to Claim 5, **characterized in that** the connecting rod (10, 11) has a recess (21) which forms part of the lubricant supply channel (13, 15, 16, 20, 21).

7. Compressor according to at least one of the preceding claims, **characterized in that** the lubricant outlet (22, 23) is configured to taper inwards in the manner of a nozzle in the direction of the lubricant outlet orifice.

8. Compressor according to at least one of the preceding claims, **characterized in that** the lubricant supply channel (13, 15, 16, 20, 21) includes a lubricant supply gallery with a plurality of lubricant nozzles arranged in a fixed manner in the crankshaft housing of the compressor (1), the lubricant nozzles being set up to spray the cylinder bore with the lubricant.

9. Compressor (1) for generating compressed air in a vehicle, comprising at least one piston (6, 7), in particular according to at least one of the preceding claims, **characterized in that** an oil control ring (42) which has a wear-reducing coating is arranged on the piston (6, 7).

10. Compressor according to Claim 9, **characterized in that** the coating contains chromium.

## Revendications

1. Compresseur (1) pour la génération d'air comprimé dans un véhicule, comprenant au moins un piston (6, 7), un cylindre (8, 9), un vilebrequin (12), un raccord de lubrifiant (14) et un canal d'alimentation en lubrifiant (13, 15, 16, 20, 21), ainsi qu'un dispositif d'accouplement (3) au moyen duquel le vilebrequin (12) du compresseur (1) peut être connecté à un dispositif d'entraînement ou peut être séparé de celui-ci, le canal d'alimentation en lubrifiant (13, 15, 16, 20, 21) débouchant dans au moins une sortie de lubrifiant (22, 23) prévue à l'intérieur du compresseur (1), laquelle sortie de lubrifiant étant orientée au moins dans des positions de rotation déterminées du vilebrequin (12) vers une surface de déplacement de piston (19) du cylindre (8, 9), **caractérisé en ce que** le dispositif d'accouplement (3) est réalisé sous forme d'embrayage de coupure pneumatique, et le dispositif d'accouplement (3) est disposé au niveau du carter du compresseur (2) et fait saillie au moins avec une région contenant au moins un moyen d'accouplement (18) hors du carter (2) du compresseur (1).

2. Compresseur selon la revendication 1, **caractérisé en ce que** le canal d'alimentation en lubrifiant (13, 15, 16, 20, 21) présente une section de canal (13) conduisant à travers le vilebrequin (12).

3. Compresseur selon la revendication 2, **caractérisé en ce que** le vilebrequin (12) présente une rainure périphérique (16) en liaison avec un raccord de lubrifiant (14) en vue de guider le lubrifiant, laquelle rainure est connectée à la section de canal (13) conduisant à travers le vilebrequin (12) en vue de guider le lubrifiant.

4. Compresseur selon la revendication 2 ou 3, **caractérisé en ce qu'**une bielle (10, 11) reliant le piston (6, 7) au vilebrequin (12) présente la sortie de lubrifiant (22, 23).

5. Compresseur selon la revendication 4, **caractérisé en ce que** le canal d'alimentation en lubrifiant (13, 15, 16, 20, 21) présente une section de canal (21) formée entre la bielle (10, 11) et le vilebrequin (12).

6. Compresseur selon la revendication 5, **caractérisé en ce que** la bielle (10, 11) présente une encoche (21) en tant que partie du canal d'alimentation en lubrifiant (13, 15, 16, 20, 21).

7. Compresseur selon au moins l'une quelconque des revendications précédentes, **caractérisé en ce que** la sortie de lubrifiant (22, 23) est réalisée de manière à se rétrécir à la manière d'une buse dans la direction de l'ouverture de sortie de lubrifiant.

8. Compresseur selon au moins l'une quelconque des revendications précédentes, **caractérisé en ce que** le canal d'alimentation en lubrifiant (13, 15, 16, 20, 21) présente une galerie d'alimentation en lubrifiant comprenant une pluralité de buses de lubrifiant disposées fixement dans le carter de vilebrequin du compresseur (1), les buses de lubrifiant étant prévues pour injecter du lubrifiant sur l'alésage du cylindre.

9. Compresseur (1) pour la génération d'air comprimé dans un véhicule, comprenant au moins un piston (6, 7), en particulier selon au moins l'une quelconque des revendications précédentes, **caractérisé en ce qu'**une bague de grattage d'huile (42) est disposée au niveau du piston (6, 7), laquelle présente un revêtement réduisant l'abrasion.

10. Compresseur selon la revendication 9, **caractérisé en ce que** le revêtement contient du chrome.
